# DEMANDE DE BREVET EUROPEEN

(11) **EP 1 522 747 A1**
(43) Date de publication de la demande: **13.04.2005**
(21) Numéro de dépôt: 04300646.9
(22) Date de dépôt: 01.10.2004
(51) Int. Cl.: F16B 35/06

(54) **Dispositif de fixation de charges en suspension sur des constructions support en matériau creux notamment**

(30) Priorité: 06.10.2003 FR 0311846
(71) Demandeur: SARL François Inglese, 43000 Le Puy en Velay (FR)
(72) Inventeur: Inglese, François, 43000, POLIGNAC (FR)
(74) Mandataire: Dupuis, François

(57) **Abrégé**

Ce dispositif de fixation de charges en suspension à partir de constructions support est remarquable en ce qu'il comprend une tige (10) support métallique de grande longueur qui présente une première zone (10a) à une extrémité sous forme de filet à bois, puis successivement une zone intermédiaire (10b) de grande longueur susceptible de déborder en constituant une zone intermédiaire au-delà de la zone de fixation et d'ancrage, et une troisième zone (10c) d'extrémité opposée agencée pour recevoir une platine support (10d) constituant une base d'appui et permettant la fixation d'un réceptacle (11) pour des charges à supporter ou à canaliser,
**et en ce qu'une** cheville d'ancrage est susceptible de recevoir ladite première zone et une partie de la seconde zone, ladite cheville étant ancrée dans une ouverture appropriée établie dans la paroi de murs, cloisons ou similaires.

## Description

L'invention se rattache au secteur technique des dispositifs de fixation et d'ancrage sur des parois de murs, cloisons et similaires.

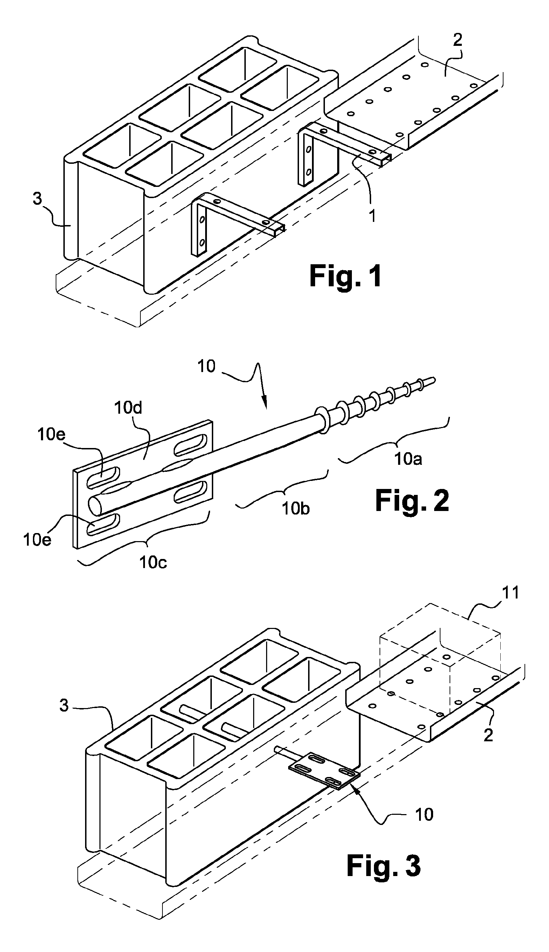

La fixation de charges en suspension par rapport à des murs, cloisons et similaires, s'effectue généralement à partir d'équerres (1) profilées en matériau plastique, métallique ou similaire, dont les branches présentent des trous d'une part par rapport à la fixation au mur, par le biais d'ensemble vis et chevilles d'ancrage et, d'autre part, par des vis de liaison sur l'autre branche horizontale pour assurer la liaison avec le support de charge (2). Cette charge peut être de toute nature et les supports de charges pouvant être, par exemple, des plateaux, des cornières, des rails, des chemins de câbles et autres. On a représenté figure 1 une telle construction.

La ou les charges supportées pouvant être importantes, il faut donc naturellement que la fixation soit correctement effectuée avec les moyens précités pour éviter l'arrachage des chevilles.

Par exemple, dans une application particulière non limitative, le dispositif de fixation permet le positionnement d'un chemin de guidage de câbles sur des constructions en matériaux creux du type moellon alvéolé. On utilise, selon l'art antérieur connu, les moyens suivants. Il s'agit de deux boulons d'ancrage s'ajustant sur des chevilles mises en place préalablement dans des ouvertures formées dans le bloc de construction (3) tel qu'un moellon alvéolé. Une plaque d'appui support d'un bras, l'ensemble formant équerre, est rapporté contre la paroi avant du ou des blocs constituant le pan de mur ou cloison, en étant maintenu par des boulons d'ancrage. La plaque et le bras équerrés sont liés ensemble par soudure ou autrement. Le bras présente des perforations pour le passage de vis de liaison sur le support de charge tel que cornière, rack, constituant le chemin de guidage, par exemple de câbles.

Une telle construction est donc coûteuse, peu pratique, exige 4 zones de fixation, à savoir deux zones de fixation sur la paroi de mur et cloison ou similaire et deux zones de fixation du support de charge tel que plateau, cornière ou similaire.

En outre, selon les cas, la forme en équerre, telle que celle utilisée dans l'application concernée, est spécifique et coûteuse à réaliser.

On voit donc qu'une telle mise en oeuvre reste complexe et ce pour des fixations sur des murs, cloisons, directement en affleurement et avec un revêtement extérieur.

La situation se complique lorsqu'il y a lieu de positionner des charges sur des supports en suspension par rapport à des pans de murs, cloisons, incorporant, en intermédiaire, des blocs ou moyen d'étanchéité et d'isolation du type blocs en polyuréthane, polystyrène ou autres composants du même type entre les blocs moellons et le parement extérieur.

La démarche du demandeur a donc été de rechercher une solution de simplification du dispositif de montage actuel qui permette aussi de s'exonérer des conditions ou non d'isolation et d'étanchéité des murs, cloisons et constructions similaires.

Le dispositif de fixation de charges en suspension à partir de constructions support est remarquable en ce qu'il comprend une tige support métallique de grande longueur qui présente une première zone à une extrémité sous forme de filet à bois, puis successivement une zone intermédiaire de grande longueur susceptible de déborder en constituant une zone intermédiaire au-delà de la zone de fixation et d'ancrage, et une troisième zone d'extrémité opposée agencée pour recevoir une platine support permettant la fixation d'un support de suspension pour des charges à supporter ou à canaliser, et en ce qu'une cheville d'ancrage est susceptible de recevoir ladite première zone et une partie de la seconde zone, ladite cheville étant ancrée dans une ouverture appropriée établie dans la paroi de murs, cloisons ou similaires.

Ces caractéristiques et d'autres encore ressortiront bien de la suite de la description.

Pour fixer l'objet de l'invention illustrée d'une manière non limitative aux figures des dessins où :
- la figure 1 est une vue illustrant un dispositif de fixation de chemin de câbles selon l'art antérieur, à titre d'exemple,
- la figure 2 est une vue du dispositif de fixation selon l'invention,
- la figure 3 est une vue en coupe illustrant le montage du dispositif selon l'invention sur une paroi de fond dans un premier exemple d'utilisation,
- les figures 4 et 5 sont des vues en coupe du dispositif de l'invention dans deux exemples d'utilisation par fixation sur moellon avec ou sans bloc intermédiaire d'isolation.

Afin de rendre plus concret l'objet de l'invention, on le décrit maintenant d'une manière non limitative illustrée aux figures des dessins.

Le dispositif de fixation, selon l'invention, est référencé dans son ensemble par (10). Il est établi sur une forme de tige support monobloc comprenant trois zones successives (10a - 10b - 10c) permettant d'assurer la fonction de positionnement et d'ancrage sur un plan de murs, cloisons et constructions similaires, et pour recevoir une charge en suspension par l'intermédiaire d'un réceptacle (11) ou autre moyen de réception ou de guidage d'éléments de charge. On entend pour « charges » le terme générique recouvrant tous produits de quelque nature que ce soit à position fixe pouvant constituer des canalisations, câbles, conduits ou similaires dans le cadre d'un équipement général dans le bâtiment.

La première zone (10a) qui est destinée à être ancrée dans la cheville (12) parallèlement positionnée dans le mur, bloc en matériau creux alvéolé, plein ou autre, est filetée selon un filet bois et se trouve intégralement dans ladite cheville (12), celle-ci étant en tous matériaux.

La seconde zone (10b) intermédiaire et successive est, de configuration cylindrique par exemple, de grande longueur avec une partie se trouvant dans ladite cheville d'ancrage et l'autre partie en débordement du plan d'appui vertical de la construction. Cette seconde zone (10b) en fonction de la position horizontale ou verticale du plan d'appui et donc du dispositif peut être coudée.

La troisième zone (10c) successive est située à l'autre extrémité de la tige support et susceptible de recevoir une platine (10d) fixée par soudure ou autrement à ladite tige support. Cette platine est de toute forme et on a représenté une configuration rectangulaire à titre d'exemple. Cette platine est centrée par rapport à ladite tige support en débordement de celle-ci en définissant ainsi, et de par et d'autre, des ailettes de préhension pour permettre la saisie par l'opérateur de ladite platine et la mise en rotation pour vissage de la tige support pour assurer son ancrage dans la cheville.

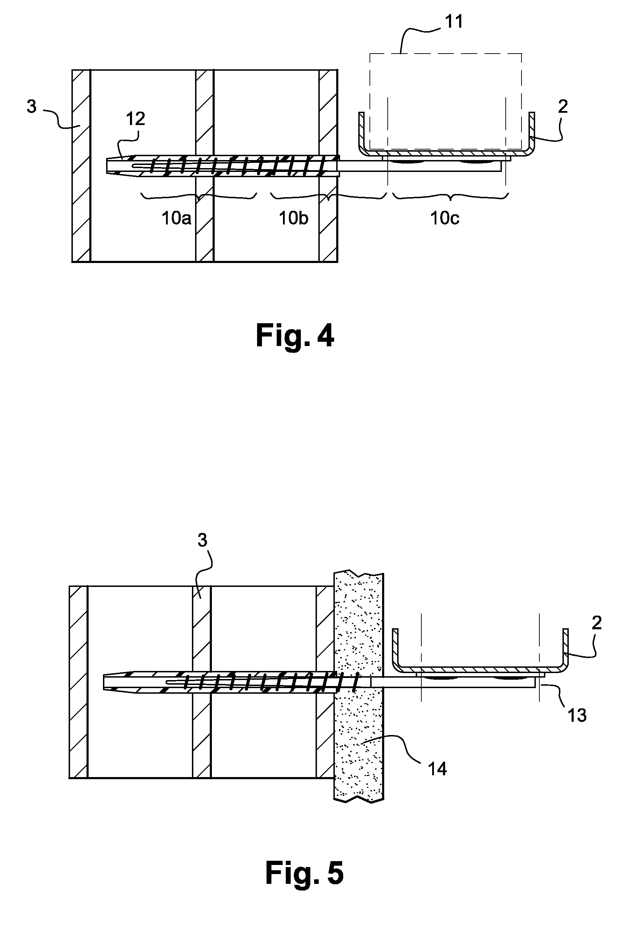

La platine est susceptible de constituer la base d'appui d'un réceptacle (11) profilée consistant par exemple d'un plateau, un rail, une cornière, de toute forme similaire, pour la suspension et réception de charges et permettre ainsi la circulation et le guidage de conduits, de canalisations, de toutes sortes, tels que chemin de câbles. A cet effet, la platine support présente des ouvertures oblongues (10e) permettant le passage de vis de fixation (13) pour des liaisons et tenue avec le réceptacle pris dans son sens général. Ainsi, le dispositif de fixation s'intégrant dans les parois de murs ou matériau creux ou pleins et constituant le support pour la platine intégrée des réceptacles, rails ou similaires, est extrêmement pratique à poser et à fabriquer. La longueur de cette tige support peut être établie selon des dimensions standards en fonction des applications d'utilisation. Par exemple dans le cadre de la figure 5, des moyens d'étanchéité et d'isolation (14) sont introduits entre le mur ou cloison constitué de bloc en béton, plein ou creux par exemple, et le parement extérieur, l'utilisation de plusieurs dispositifs de l'invention est particulièrement pratique, les tiges support traversant des moyens d'isolation sans les détériorer.

Les avantages restent bien dans le cadre de l'invention. On souligne la simplicité du montage, sa rapidité et la fabrication aisée et peu coûteuse des dispositifs de fixation.

Les platines peuvent être disposées et orientées avantageusement dans un plan horizontal, et selon les besoins, et être positionnées différemment perpendiculaires par rapport au sol.

## Revendications

1. Dispositif de fixation de charges en suspension à partir de constructions support **caractérisé en ce qu'**il comprend une tige (10) support métallique de grande longueur qui présente une première zone (10a) à une extrémité sous forme de filet à bois, puis successivement une zone intermédiaire (10b) de grande longueur susceptible de déborder en constituant une zone intermédiaire au-delà de la zone de fixation et d'ancrage, et une troisième zone (10c) d'extrémité opposée agencée pour recevoir une platine support (10d) constituant la base d'appui et permettant la fixation d'un réceptacle profilé (11) pour des charges à supporter ou à canaliser,
et **en ce qu'**une cheville d'ancrage est susceptible de recevoir ladite première zone et une partie de la seconde zone, ladite cheville étant ancrée dans une ouverture appropriée établie dans la paroi de murs, cloisons ou similaires.

2. Dispositif selon la revendication 1 **caractérisé en ce que** la zone intermédiaire (10b) est coudée.

3. Dispositif selon l'une quelconque des revendications 1 et 2 **caractérisé en ce que** la platine support présente des ouvertures oblongues (10e) pour le passage de vis de fixation (13) pour la liaison et tenue du réceptacle (11).

4. Dispositif selon l'une quelconque des revendications 1 à 3 **caractérisé en ce que** le réceptacle (11) en forme de rails autorise le positionnement et la tenue en constituant un chemin de guidage des canalisations, cables, conduits dans des applications au batiment
